# EUROPEAN PATENT SPECIFICATION

(11) **EP 4 443 386 B1**
(45) Date of publication and mention of the grant of the patent: **01.04.2026**
(21) Application number: 24158794.8
(22) Date of filing: 21.02.2024
(51) Int. Cl.: G06T 7/20, G06T 7/246

(54) **SYSTEMS AND METHODS FOR OBJECT TRACKING WITH RETARGETING INPUTS**
SYSTEME UND VERFAHREN ZUR OBJEKTVERFOLGUNG MIT NEUZIELEINGABEN
SYSTÈMES ET PROCÉDÉS DE SUIVI D'OBJET AVEC RECIBLAGE D'ENTRÉES

(30) Priority: 09.03.2023 US 202363451106 P
(43) Date of publication of application: 09.10.2024
(60) Divisional application: 26152820.2
(73) Proprietor: Palantir Technologies Inc., Denver, CO 80202 (US)
(72) Inventor: PATSEKIN, Aleksandr, Denver, 80202 (US); RADFORD, Ben, Denver, 80202 (US); DERWIN, Cameron, Denver, 80202 (US); MARASCO, Daniel, Denver, 80202 (US); WANG, Di, Denver, 80202 (US); LYMPEROPOULOS, Dimitrios, Denver, 80202 (US); KANG, Elliot, Denver, 80202 (US); KIM, Keun Jae, Denver, 80202 (US); BETTEN, Matthew, Denver, 80202 (US); FEDDERLY, Matthew, Denver, 80202 (US); GORACZKO, Michel, Denver, 80202 (US); LEI, Peng, Denver, 80202 (US); SRIKHANTA, Prasanna, Denver, 80202 (US); LALONDE, Rodney, Denver, 80202 (US); FACKLER, Steven, Denver, 80202 (US); SHEN, Tong, Denver, 80202 (US); LI, Xin, Denver, 80202 (US); WU, Yue, Denver, 80202 (US)
(74) Representative: Sayer, Robert David

(56) References cited:
- WO-A1-2020/140223
- CN-B- 103 473 542

## Description

### CROSS REFERENCE TO RELATED APPLICATIONS

This application claims priority to U.S. Provisional Application No. 63/451,106, entitled "SYSTEMS AND METHODS FOR OBJECT TRACKING WITH RETARGETING INPUTS," and filed on March 9, 2023.

### TECHNICAL FIELD

Certain embodiments of the present disclosure relate to object tracking. More particularly, some embodiments of the present disclosure relate to single object tracking (SOT).

### BACKGROUND

There are two major computer vision based object tracking models which are used in object tracking systems: multiple object tracking (MOT) and SOT. Often, MOT models require training a detector with predefined classes and the tracking detected objects of predefined classes across frames of a video. Comparatively, often SOT models do not require a separately trained object detector, but instead can be designed to track any generic object by drawing a bounding box around the target of interest.

However, conventional object tracking systems have disadvantages. For example, conventional object tracking systems may learn the wrong target appearance or update an object tracking model (e.g., an SOT model) with an incorrect target appearance. For example, conventional object tracking systems may not know whether or not the object tracking model has already lost the right target or locked on to a different object. Further, for conventional object tracking systems, if the object tracking model is updated with the incorrect object, the detector model may drift to a different (i.e., incorrect) target and be unable to locate the right (i.e., correct) target.

Hence, it is desirable to improve techniques for object tracking. WO2020/140223 A1 discloses a long-term object tracker that employs a continuous learning framework to overcome drift in the tracking position of a tracked object. CN 103473542 B discloses an object tracking method based on multi-cue fusion.

### SUMMARY

The invention is set forth in the claims. Certain embodiments of the present disclosure relate to object tracking. More particularly, some embodiments of the present disclosure relate to multiple object tracking (MOT) and single object tracking (SOT).

At least some aspects of the present disclosure are directed to a method for user-assisted object tracking. The method includes: receiving a first image frame of a sequence of image frames; performing object detection using an object tracker to identify an object of interest in the first image frame, based upon one or more templates associated with the object of interest in a template repository; outputting a first indicator associated with a first image portion corresponding to the object of interest; receiving a user input associated with the object of interest, the user input indicating an identified image portion in the first image frame; generating a retargeted template, based at least in part on the identified image portion; and determining a second image portion associated with the object of interest in a second image frame of the sequence of image frames, using the object tracker, based at least in part on the retargeted template. In some examples, the second image frame is after the first image frame in the sequence of image frames. In some examples, the second image portion is different from the first image portion. Identifying a third image portion associated with the object of interest, using the object tracker, on a third image frame of the sequence of image frames, based at least in part on the retargeted template, wherein the third image frame is after the second image frame in the sequence of image frames; determining a confidence level associated with the third image portion; evaluating whether the confidence level meets one or more predetermined criteria; in response to the confidence level meeting the one or more predetermined criteria: generating a short-term template, based on the third image portion; adding the short-term template to a short-term template repository of the template repository; assigning a first weight to the retargeted template; assigning a second weight to the short-term template, wherein the first weight is higher than the second weight; and determining a fourth image portion of the object of interest on a fourth image frame of the sequence of image frames, using the object tracker, based at least in part on the retargeted template, the short-term template, the first weight, and the second weight, wherein the fourth image frame is after the third image frame in the sequence of image frames. In some examples, the method is performed using one or more processors.

At least some aspects of the present disclosure are directed to a system for user-assisted object tracking. The system includes at least one processor and at least one memory storing instructions that, when executed by the at least one processor, causes the system to perform a set of operations. The set of operations includes: receiving a first image frame of a sequence of image frames; performing object detection using an object tracker to identify an object of interest in the first image frame, based upon one or more templates associated with the object of interest in a template repository; outputting a first indicator associated with a first image portion corresponding to the object of interest; receiving a user input associated with the object of interest, the user input indicating an identified image portion in the first image frame; generating a retargeted template, based at least in part on the identified image portion; and determining a second image portion associated with the object of interest in a second image frame of the sequence of image frames. In some examples, the second image portion is different from the first image portion. Identifying a third image portion associated with the object of interest, using the object tracker, on a third image frame of the sequence of image frames, based at least in part on the retargeted template, wherein the third image frame is after the second image frame in the sequence of image frames; determining a confidence level associated with the third image portion; evaluating whether the confidence level meets one or more predetermined criteria; in response to the confidence level meeting the one or more predetermined criteria: generating a short-term template, based on the third image portion; adding the short-term template to a short-term template repository of the template repository; assigning a first weight to the retargeted template; assigning a second weight to the short-term template, wherein the first weight is higher than the second weight; and determining a fourth image portion of the object of interest on a fourth image frame of the sequence of image frames, using the object tracker, based at least in part on the retargeted template, the short-term template, the first weight, and the second weight, wherein the fourth image frame is after the third image frame in the sequence of image frames.

At least some aspects of the present disclosure are directed to a method for user-assisted object tracking is provided. The method includes: receiving a first image frame of a sequence of image frames, and performing object detection using an object tracker to identify an object of interest in the first image frame, based upon one or more templates associated with the object of interest in a template repository. In some examples, the object tracker is initialized by: receiving a first user input associated with a first identified image portion on the first image frame of the sequence of image frames; generating an initial template, based at least in part on the first identified image portion; and initializing the object tracker, based at least in part on the initial template. In some examples, the method further includes outputting a first indicator associated with the object of interest, and receiving a second user input associated with the object of interest. In some examples, the second user input indicates a second identified image portion in the first image frame. In some examples, the method further includes generating a retargeted template, based at least in part on the second identified image portion, determining a second image portion associated with the object of interest in a second image frame of the sequence of image frames, using the object tracker, based at least in part on the retargeted template, and identifying a plurality of objects using a software detector. In some examples, the software detector is initialized by: comparing each object of the plurality of objects with the initial template, determining that one object of the plurality of objects matches to the initial template, and initializing the software detector, based at least in part on the one object of the plurality of objects. In some examples, the method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is an illustrative example of an object detection system or workflow, according to certain embodiments of the present disclosure.
Figure 2A is an illustrative example of a method for object tracking with retargeted inputs, according to certain embodiments of the present disclosure.
Figure 2B is an illustrative example of a method for object tracking with retargeted inputs, according to certain embodiments of the present disclosure.
Figure 3 is a simplified diagram showing a method for object tracking with retargeted inputs, according to certain embodiments of the present disclosure.
Figure 4 illustrates a simplified diagram showing a computing system for implementing a system for object tracking with retargeted inputs, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods for object tracking often include one of two major computer vision based object tracking models: multiple object tracking (MOT) or single object tracking (SOT). However, conventional object tracking systems have disadvantages. For example, conventional object tracking systems may learn the wrong target appearance or update an object tracking model (e.g., an SOT model) with an incorrect target appearance. For example, conventional object tracking systems may not know whether or not the object tracking model has already lost the right target or locked on to a different object. Further, for conventional object tracking systems, if the object tracking model is updated with the incorrect object, the detector model may drift to a different (i.e., incorrect) target and be unable to locate the right (i.e., correct) target.

Various embodiments of the present disclosure can achieve benefits and/or improvements by a computing system. According to certain embodiments, the object tracking system includes a retargeting feature for object tracking systems. In some embodiments, in addition to allowing users to specify an initial bounding box around a target to track, object tracking systems according to the present disclosure include mechanisms for the user to provide a user input (e.g., a selection) on a target when the object tracking system appears to have lost the target. Accordingly, the user may provide user input to recalibrate for which target the object tracking system is tracking, without necessarily having to retrain models within the object tracking system. Therefore, mechanisms provided herein provide improved accuracy for tracking a target, an improved user-experience to enable a user to accurately track a target, improved efficiency for tracking a target (e.g., by receiving an updated input, but not necessarily having to retrain a model), amongst other benefits which will be recognized by those of ordinary skill of the art, at least in light of the teachings provided herein.

At least some embodiments of the present disclosure are directed to object tracking over a period of time (e.g., 5 minutes, 10 minutes, 1 hour, 1 day, 10 days, etc.). In certain embodiments, an object tracking system (e.g., an object tracking software, an object tracking platform, etc.) can use one or more user inputs to adjust and/or correct the object tracking (e.g., retargeting to the object of interest). In some embodiments, therefore the object tracking system may receive one or more corrective user inputs for adjusting and/or correcting the object tracking, wherein the user input may identify a correct object. In some embodiments, the object tracking system uses the one or more user inputs to generate and/or update a template for an object of interest. In certain embodiments, a template refers to an image and/or one or more features extracted from the image. For example, the features extracted from the image may include pixel values, shapes, vectors, and/or other elements of an image which can be extracted based on objects of interest to be detected. In some embodiments, a template is associated with an object of interest. In certain embodiments, the image of the template is a portion of a captured image (e.g., a frame, a still image, a sequence of images, a video). In some embodiments, a frame, also referred to as an image frame, is an image in a sequence of images or an image in a video.

According to certain embodiments, computer vision based object tracking is a technology to detect and track objects of interest by detecting objects, assigning an identifier (ID) to each object and maintaining their IDs throughout a video or a sequence of images. In some examples, object tracking has been applied in self-driving, retail, and other industries.

According to certain embodiments, the systems and methods of object tracking use a computing model (e.g., a machine-learning model). In certain embodiments, a model, also referred to as a computing model, includes a model to process data. A model includes, for example, an artificial intelligence (AI) model, a machine-learning (ML) model, a deep-learning (DL) model, an artificial neural network (ANN), a deep neural network (DNN), an image processing model, an algorithm, a rule, other computing models, and/or a combination thereof.

According to some embodiments, there are two major types of visual object tracking models (e.g., visual object tracking paradigms): (i) multiple object tracking (MOT) and (ii) single object tracking (SOT). In certain embodiments, the MOT model requires first training a detector with predefined classes and then tracking/associating detected objects of predefined classes across frames of a video. In certain embodiments, a detector, also referred to as a software detector or an object detector, refers to an ML detector, a DL detector, an ANN detector, a DNN detector, and/or the like. In some embodiments, the software detector includes a SOT model. In certain embodiments, the MOT model consists of a jointly trained detector with predefined classes and trackers to detect and track objects across frames of a video. In some embodiments, the SOT model does not require a separately trained object detector. In certain embodiments, the SOT model is designed to track an object (e.g., any generic object) by drawing a bounding box around the target of interest (e.g., an object of interest).

According to certain embodiments, an object tracking system (e.g., a single object tracking (SOT) system, a single object tracking software) includes a software module using computer vision task with a user interface that allows a user to provide a user input related to the target of interest (e.g., object of interest), and then detect and track the target. In some embodiments, the user input includes drawing a bounding box around the target of interest. In certain embodiments, the user input includes a click on an image, for example, at the target of interest. In some embodiments, the existing SOT approaches track a target mainly replying on the initial visual appearance that the user specified. In certain embodiments, for long term tracking (e.g., 5 minutes, 10 minutes, 1 hour, 1 day, 10 days, etc.), object appearance, camera view angle, zooming level, lighting and background can change significantly over time. In some embodiments, these factors pose some challenges in learning and discriminating the target from distractors (e.g., other similar looking objects) and background over time.

According to certain embodiments, the user input is generated by a machine-learning model (e.g., a language model). In some examples, the machine learning model is a language model ("LM") that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an advanced artificial intelligence algorithm that has been trained to understand, generate, and manipulate language. In some embodiments, a language model can be useful for natural language processing, including receiving natural language prompts and providing natural language responses based on the text on which the model is trained. In certain embodiments, a language model may include an n-gram, exponential, positional, neural network, and/or other type of model.

In examples, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like. Thus, a prompt describing an object to be tracked may be provided for processing by the LLM, which thus generates a recommendation accordingly.

According to some embodiments, some SOT approaches periodically update a detector model (e.g., a neural network, a part of the neural network weights) in an online fashion (e.g., when the detector software module is running). In certain embodiments, the object tracking system uses detector to predict target appearance. In some embodiments, the object tracking system can learn the target appearance changes over time. In certain embodiments, the object tracking system may learn the wrong target appearance or update the detector model with the wrong target appearance as these approaches do not know whether or not the model has already lost the right target or locked on to a different object. In some embodiments, if the detector model is updated with the incorrect object, the detector model may start drifting to a different target and cannot locate the right target.

According to certain embodiments, the object tracking system includes a retargeting feature for SOT. In some embodiments, in addition to allow user to specify the initial bounding box around the target to track, the object tracking system includes a mechanism for the user to provide a user input (e.g., do a single click) on the target when SOT loses the target. In certain embodiments, the object tracking system includes the mechanism to use the retargeting signal from the user (e.g., one or more users).

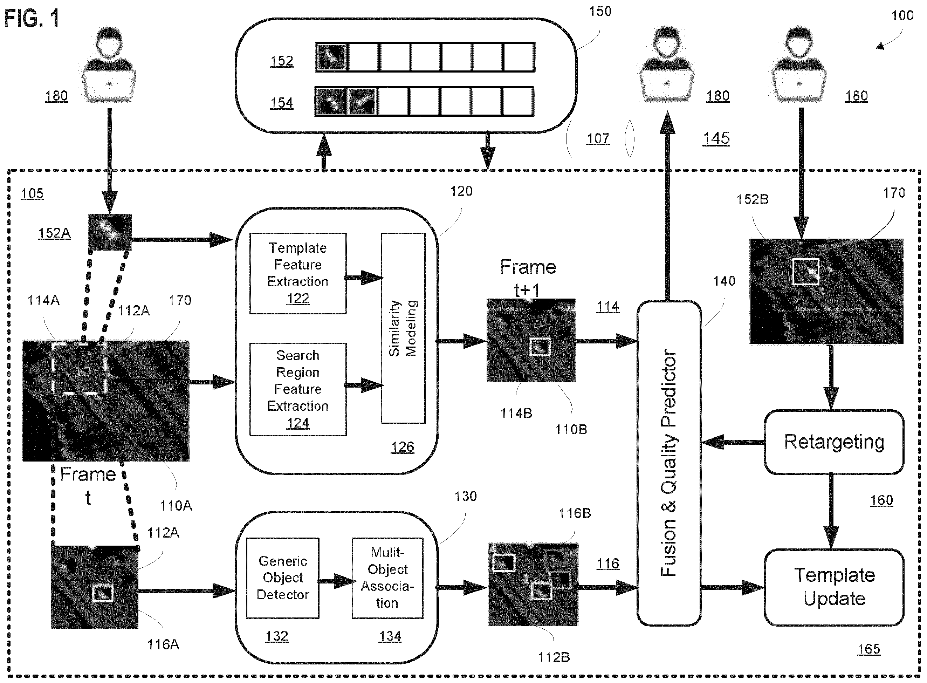

Figure 1 is an illustrative example of an object tracking system or workflow 100, according to certain embodiments of the present disclosure. Figure 1 is merely an example. One of ordinary skill in the art would recognize many variations, alternatives, and modifications. According to some embodiments, the object tracking system includes a single object tracker (SOT) 120 (e.g., a SOT tracker, a single object tracking module, a SOT software module), a multiple-object tracker (MOT) 130 (e.g., a MOT tracker, a multiple-object tracking module, a MOT software module), a fusion and quality predictor 140, a template repository 150, a retargeting module 160, a template update module 165, and a user interface 170 that allows users 180 to interact with the system 100. In certain embodiments, the SOT tracker 120, the MOT tracker 130, the fusion and quality predictor 140, the retargeting module 160, and/or the template update module 165 are integrated into a piece of software 105. In some embodiments, the object tracking system 100 includes a storage repository 107, for example, including the template repository 150.

According to some embodiments, the object tracking system 100 differentiates user identified templates (e.g., user provided templates) and algorithm and/or model derived and/or estimated templates. In certain embodiments, the object tracking system 100 includes two or more types of templates. In some embodiments, a type of templates includes templates generated based on user inputs, also referred to as long-term templates. In certain embodiments, a type of templates includes algorithm and/or model derived and/or estimated templates, or templates generated based on model outputs, also referred to as short-term templates.

In some embodiments, the users 180 can be prompted to provide feedback to the object tracking system 100, such as to generate the templates. In some embodiments, the users 180 can be prompted to provide feedback at regular intervals. In some embodiments, the users 180 can be prompted to provide feedback at irregular intervals. In some embodiments, the users 180 can provide feedback without being prompted (e.g., between adjacent prompting instances, before a prompting instance has occurred, and/or after a prompting instance has occurred).

In some embodiments, the user input is generated by a machine-learning model (e.g., a language model). In some examples, the machine learning model is an LM that may include an algorithm, rule, model, and/or other programmatic instructions that can predict the probability of a sequence of words. In some embodiments, an LM may, given a starting text string (e.g., one or more words), predict the next word in the sequence. In certain embodiments, an LM may calculate the probability of different word combinations based on the patterns learned during training (based on a set of text data from books, articles, websites, audio files, etc.). In some embodiments, an LM may generate many combinations of one or more next words (and/or sentences) that are coherent and contextually relevant. In certain embodiments, an LM can be an advanced artificial intelligence algorithm that has been trained to understand, generate, and manipulate language. In some embodiments, an LM can be useful for natural language processing, including receiving natural language prompts and providing natural language responses based on the text on which the model is trained. In certain embodiments, an LM may include an n-gram, exponential, positional, neural network, and/or other type of model.

In examples, the machine learning model is an LLM, which was trained on a larger data set and has a larger number of parameters (e.g., billions of parameters) compared to a regular LM. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like. Thus, a prompt describing an object to be tracked may be provided for processing by the LLM, which thus generates a recommendation accordingly.

In some embodiments, the object tracking system 100 includes two or more template repositories (e.g., template galleries), for example, a long-term template repository 152 and a short-term template repository 154. In some embodiments, the long-term template repository (e.g., long term gallery) 152 is configured to store user provided initial template and retargeting templates. In certain embodiments, the short-term template repository (e.g., short-term gallery) 154 is configured to store estimated and/or inferred templates with high confidence generated from a detector model (e.g., the SOT module 120, the MOT module 130, etc.).

According to certain embodiments, the object tracking system 100 includes an initialization process. In some embodiments, when a user provides an initial bounding box around an object of interest (e.g., the target) or the initial bounding box indicating an SOT identified object (e.g., shown with an indicator), the object tracking system initializes and/or configures the SOT tracker 120. In certain embodiments, when the initial bounding box is provided, in addition to initialize SOT tracker, the object objecting system 100 initializes and/or configures the MOT tracker 130 with a track ID (identifier) (e.g., track ID = 1) assigned if there is a detected object (e.g., a detected box represented by a detection box) from MOT matched with the initial bounding box. In certain embodiments, the bounding box is a closed shape. In some examples, the bounding box may be a square, or a circle, or a triangle, or any other regular polygon which should be recognized by those of ordinary skill in the art. In some examples, the bounding box may be an irregular polygon, as should be recognized by those of ordinary skill in the art.

In some embodiments, a match is found when two boxes, such as a bounding box representing a detected object by the SOT tracker 120 and a detection box representing a detected object by the MOT tracker 130, are within a certain IOU (intersection of union) threshold. In certain embodiments, the IOU threshold is a predetermined IOU threshold. In certain embodiments, an IOU quantifies the extent of overlap of two boxes (e.g., two regions). In some embodiments, the IOU is higher when the region of overlap is greater. In certain embodiments, a match is found if a number of feature similarity is above a threshold. In certain embodiments, a match is found if a number of feature similarity is below and/or equal to a threshold.

In some embodiments, the system 100 generates an initial template 152A based on the user input and adds the initial template to the template repository 150 and/or the long-term template repository 152. In certain embodiments, the object tracking system 100 initializes the SOT tracker 120 using the initial template 152A. In some embodiments, the object tracking system 100 initializes the MOT tracker 130 (e.g., a region MOT tracker). In certain embodiments, the object tracking system 100 initializes the MOT tracker 130 with a track ID (identifier) assigned (e.g., the initial track ID) corresponding to an object of interest if there is a detection from the MOT tracker 130 matched with the initial template. In some embodiments, the MOT tracker 130 and/or the MOT tracks (with different track IDs) are initialized and/or configured based on certain number of consecutive detections and/or associations of the same objects. In certain embodiments, each of the identified objects by the MOT tracker 130 has a track ID. In some embodiments, each identified object by the MOT tracker 130 across different frames and associated with a same object is assigned with the same track ID. For example, the track ID for the object of interest remains the same (e.g., the initial track ID) across multiple image frames.

In certain embodiments, the SOT tracker 120 generates the SOT output 114 associated with the object of interest (e.g., the target, the target of interest), for example, a detected region associated with the object of interest, a bounding box associated with the object of interest, and/or the like. In some embodiments, the MOT tracker 130 processes an image frame (e.g., the image frame 110A, the image frame 110B) and/or an image region in the image frame to generate the MOT output 116, for example, one or more detected objects, one or more bounding boxes (e.g., detection boxes) associated with the one or more detected objects. In some embodiments, the image frames 110A, 110B are received from one or more image sensors (e.g., one or more still cameras, video cameras, and/or satellites).

In certain embodiments, the MOT tracker 130, also referred to as the region MOT tracker 130, processes an image region 112A related to the identified object of interest 114A by the SOT tracker 120. In some embodiments, the MOT tracker 130 detects and/or identifies one or more objects, including the identified object 116A in the frame 112A and the one or more objects 116B in the search region 112B, which is a part of the frame 110B.

According to some embodiments, the SOT tracker 120 includes a template feature extraction model 122, search region feature extraction model 124, and/or similarity modeling 126. In certain embodiments, the template feature extraction model 122 can extract features (e.g., target characteristics) from one or more templates. In some embodiments, the template feature extraction model 122 can extract embeddings, also referred to as low-dimensional representations (e.g., vectors) from the one or more templates. In some embodiments, the template feature extraction model 122 can extract features and/or embeddings from the one or more templates. In some embodiments, extracted features are the same as extracted embeddings. In certain embodiments, extracted features are represented by embeddings (e.g., vector representations).

In certain embodiments, the search region feature extraction model 124 can extract features (e.g., target characteristics, background characteristics) of a search region which may have one or more templates within the search region. In some embodiments, a search region is a region of a certain size (e.g., with 100 square meters) containing an identified target of interest. In certain embodiments, the search region is in a pixel space. In certain embodiments, the search region is relative to the size of the one or more template (e.g., 5 times the template bounding box size, such as 50 pixel x 50 pixel if the template bounding box size is 10 pixel x 10 pixel). In certain embodiments, a search region is a region of a certain size (e.g., with 100 square meters) with the identified target of interest at the center. In some embodiments, the search region feature extraction model 124 can extract embeddings from the one or more templates. In some embodiments, the search region feature extraction model 124 can extract features and/or embeddings from the one or more templates. In some embodiments, extracted features are the same as extracted embeddings. In certain embodiments, extracted features are represented by embeddings (e.g., vector representations).

In certain embodiments, the SOT tracker 120 and/or the similarity model 126 determines one or more similarities (e.g., similarity metrics) between a template and a detected object in the search region. In some embodiments, the SOT tracker 120 and/or the similarity model 126 determines a similarity metric (e.g., a distance) between the template and a detected object. In certain embodiments, the SOT tracker 120 and/or the similarity model 126 determines the similarity metric using a similarity machine-learning model, for example, a regression similarity learning model, a classification similarity learning model, a ranking similarity learning model, an appearance model, and/or the like. In some embodiments, the SOT tracker 120 and/or the similarity model 126 determines the similarity metric between the template and a detected object using a Siamese neural network and/or the like. In certain embodiments, the SOT tracker 120 and/or the similarity model 126 determines a similarity distance between the template and a detected object.

In some embodiments, the SOT tracker 120 can use a motion model to predict a search region in a subsequent image frame (e.g., the image frame 110B). In certain embodiments, the SOT tracker 120 and/or the similarity model 126 can detect an object of interest 114 (e.g., finding a matching bounding box) using one or more templates in the template repository 150.

In certain embodiments, the similarity model 126 can output embeddings extracted from an image and a template and/or extracted features. In some embodiments, the similarity model 126 uses a template matching model to identify and/or locate an object of interest in the input image. In certain embodiments, the similarity model 126 includes one or more template matching models.

According to certain embodiments, the MOT tracker 130 includes a generic object detector 132 and a multi-object association module 134. In some embodiments, the generic object detector 132 is trained to identify generic objects, for example, objects of multiple classes. In certain embodiments, the multi-object association module 134 can produce associations between detections (e.g., detected objects). In some embodiments, the multi-object association module 134 can determine associations of objects between frames (e.g., image frames).

According to some embodiments, the SOT tracker 120 predicts and/or generates an identified object 114B, also referred to as the SOT output 114B, for the image frame 110B. In certain embodiments, the image frame 110B is subsequent to or after the frame 110A. In some embodiments, the MOT tracker 130 identifies one or more objects 116B in the frame 110B. In certain embodiments, the identified object 114B matches to one of the one or more objects 116B.

In certain embodiments, the MOT tracker 130 may run at a reduced frequency (e.g., every 5 or 10 frames) and/or run on demand, for example, to improve runtime efficiency. In some embodiments, the region MOT tracker 130 may be triggered by one or more conditions (e.g., a demand). In certain embodiments, the one or more conditions include, for example, when retargeting is triggered, when the confidence score corresponding the SOT output 114 is low, when the movement between the current SOT output (e.g., the SOT output 114B) and the previous SOT output (e.g., the SOT output 114A) is large, and/or the like.

In some embodiments, for the short-term template repository 154 and the long-term template repository 152, the object tracking system 100 includes a separate feature extractor (e.g., a trained feature extractor) to extract features and/or embeddings from one or more images. In certain embodiments, the object detection object 100 stores the extracted features and/or image crops in the template repository 150. In certain embodiments, the object tracking system 100 uses a first feature extractor for a first type of templates (e.g., long-term templates) and uses a second feature extractor for a second type of templates (e.g., short-term templates). In some embodiments, the first feature extractor is different from the second feature extractor. In certain embodiments, the first feature extractor is the same as the second feature extractor. In some embodiments, an image embedding, also referred to as an embedding, refers to a lower dimensional representation of an image, such as a vector representing the image.

According to certain embodiments, the fusion and quality predictor 140 generates, for each image frame or at least a part of the image frames, the tracker output 145 based at least in part on the SOT output 114, one or more MOT detected objects 116, one or more confidence scores corresponding the SOT output 114 and the one or more MOT detected objects 116, a distance between the SOT output 114 and a SOT output of one or more previous frames, one or more SOT outputs from the previous frames, a distance between the SOT output 114 and one or more templates in the template repository 150, and/or the like. In some embodiments, the fusion and quality predictor 140 evaluates for an image frame, whether the SOT output 114 matches a detected object 116 of the same track ID (e.g., the initial track ID, track ID = 1) of the region MOT 130, for example, based on IOU (intersection of union) of two bounding boxes above a certain threshold.

In some embodiments, the fusion and quality predictor 140 determines the IOU between the SOT output 114 and the MOT detected object 116. In certain embodiments, the determined IOU is compared to one or more IOU thresholds. In certain embodiments, if the determined IOU is above the certain IOU threshold, the fusion and quality predictor 140 can add the SOT output 114 to the template repository 150 and/or the short-term template repository 152. In some embodiments, the fusion and quality predictor 140 determines feature similarity between the SOT output 114 and the MOT detected object 116. In certain embodiments, the fusion and quality predictor 140 determines whether feature similarity meets one or more criteria between the number of matching features between one or more SOT features in and/or extracted from the SOT output 114 and one or more MOT features in and/or extracted from the MOT output 116.

In some embodiments, the SOT output 114 is compared to the detected object 116. In some embodiments, if the SOT output 114 does not match the detected object 116, the fusion and quality predictor 140 evaluates the SOT output 114 based on one or more SOT criteria (e.g., a number of factors, heuristics, etc.), for example, such as criteria on confidence, distance from the previous frame, distance from one or more templates in the template repository 150, and/or the like. In certain embodiments, the one or more SOT criteria includes criteria on confidence score, a distance of the SOT output 114 from a SOT output in the previous frame, a distance of the SOT output 114 from one or more templates in the template repository 150, and/or the like. In some embodiments, if the SOT output meets the one or more SOT criteria, the system sets the tracker output as the SOT output.

In some embodiments, if the SOT output 114 does not match the detected object 116 by the MOT tracker 130 and if the detected object 116 (e.g., the detected object 116 with the initial track ID) meets one or more MOT criteria, the fusion and quality predictor 140 can set the detected object 116 as the tracker output 145. In certain embodiments, if the SOT output 114 does not match the detected object 116 by the MOT tracker 130, if the SOT output 114 does not meet the one or more SOT criteria, and if the detected object 116 (e.g., the detected object 116 with the initial track ID) meets one or more MOT criteria, the fusion and quality predictor 140 can set the detected object 116 as the tracker output 145. In some embodiments, the one or more MOT criteria includes criteria on confidence score, distance from a SOT output in the previous frame, distance from one or more templates in the template repository 150, and/or the like. In certain embodiments, if both the SOT output 114 does not meet the one or more SOT criteria and the MOT output 116 does not meet the one or more MOT criteria, the fusion and quality predictor 140 can set the tracker output 145 is as object-not-found.

According to some embodiments, the fusion and quality predictor 140 is configured to add, update, and/or remove templates from the template repository 150. In certain embodiments, for each frame (e.g., one image of a sequence of images) or at least a part of frames, if a SOT identified object (e.g., corresponding to image potion in a bounding box, an image portion) is confident enough (e.g., above a certain threshold) or if the SOT identified object matches with an object identified by the MOT tracker 130 (e.g., a region MOT), the SOT identified object and/or the associated image portion (e.g., an image region, a portion of an image) is identified as a template and/or added to the short-term template repository 154. In some embodiments, the fusion and quality predictor 140 generates a tracker output 145 based at least in part on the output from the SOT tracker 120 and/or the output from the MOT tracker 130. For example, if the identified object 114A matches the identified object 116A, the fusion and quality predictor 140 generates a template corresponding to the identified object 116 and/or stores the template to the template library 150 and/or the short-term template library 154.

According to certain embodiments, the object tracking system 100 includes a template update module 165 to update the template repository 150 and update the SOT tracker 120. In some embodiments, the template update module 165 performs a template update if the image embedding for the SOT output 114 (e.g., the SOT identified object, the object 114A) is similar to the template embeddings in both the short-term template repository 154 and the long-term template repository 152, for example, to prevent update polluting the tracking model with wrong target object (e.g., wrong target appearance). In certain embodiments, template update module 165 includes different implementations (e.g., implementations of strategies), for example, to strengthen or loosen the criteria for updating templates. In some embodiments, the object tracking system 100 can include a criterion on capturing the target object (e.g., target appearance) change in time and a criterion on not polluting the model with wrong target object (e.g., target appearance). In certain embodiments, the template update module 165 can include a criterion on appearance change in identifying new templates.

In certain embodiments, the one or more templates in the template repository 150 are used for the tracking model updates. In some embodiments, the one or more templates in the template repository 150 are weighted based on their recency (e.g., during training). In certain embodiments, a template in the long-term repository 152 is higher than a template in the short-term repository 154. In some embodiments, a most recent template in the long-term repository 152 is higher than a most recent template in the short-term repository 154. In some embodiments, the template update module 165 assigns one or more weights to the one or more templates. In certain embodiments, the template update module 165 may assign a weight to a new template based at least in part on an appearance similarity.

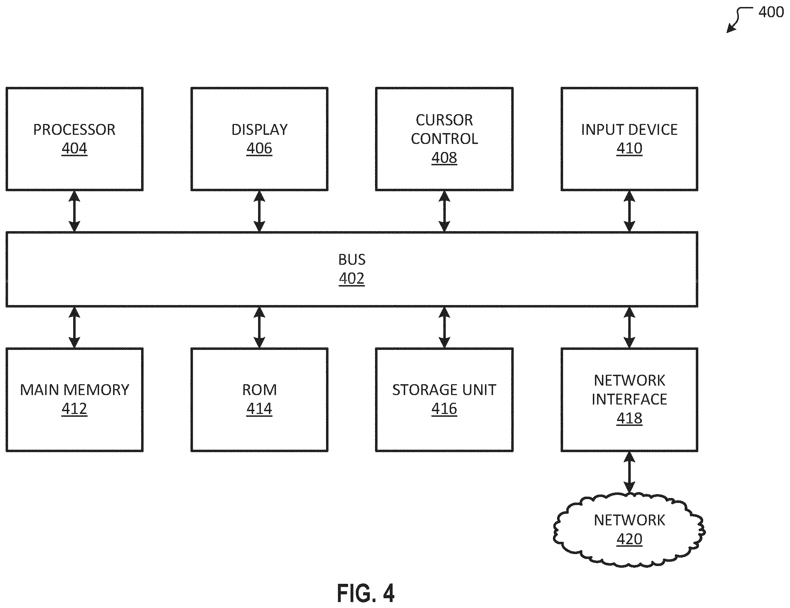

According to some embodiments, the object tracking system 100 includes a retargeting module 160 configured to receive one or more user inputs, for example, via a user interface 170. In some examples, the user interface 170 includes a graphical user interface (GUI), which can be displayed on a display of a computing device (e.g., display 406 of Figure 4). In some examples, the GUI 170 may be an animated graphical user interface which is updated (e.g., animated) based on methods provided herein. For example, the GUI may be updated according to techniques illustrated and/or described with respect to least Figure 1, Figure 2A, Figure 2B, and/or Figure 3.

In certain embodiments, when retargeting happens, the short-term template repository 154 is emptied, reinitialized, and/or reset. For example, when retargeting happens, it means the SOT tracker 120 has already lost the target and the short-term template repository 154 may be contaminated with wrong template (embeddings). In some embodiments, the template update module 165 and/or the object tracking system 100 can generate a retargeting template 152B based at least in part on the user input (e.g., a click, a drawn bounding box, etc.). In certain embodiments, the retargeting template 152B is added to the long-term template repository 152.

In some embodiments, the object tracking system 100 uses one or more templates in the long-term template repository 152 and data augmentations to update the SOT tracker 120 and/or train the tracker model (e.g., the online tracker model). In certain embodiments, the object tracking system 100 can reset or configure the SOT tracker 120 using the retarget template 152B. In some embodiments, the object tracking system 100 can reset or configure the MOT tracker 130 using the retarget template 152B. In certain embodiments, the object tracking system 100 uses the retargeting template to predict new target appearance for the target object. In some embodiments, the SOT tracker 120 and/or the object tracking system 100 assigns a first weight to the initial template 152A and a second weight to the retargeting template 152B. In certain embodiments, the second weight is higher than the first weight.

In some embodiments, the repository 107 can include one or more templates (e.g., positive templates, negative templates, long-term templates, short-term templates), one or more confidence levels, one or more input images, one or more model outputs, one or more regions, one or more extracted features, one or more models, and/or the like. The repository 107 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In certain embodiments, various components in the object tracking system 100 can interact with one another via a software interface. In some embodiments, a software interface includes an application programming interface (API), a web service interface, retrieving information from a file, retrieving information from a data repository, and/or the like. In some cases, various components in the object tracking system 100 can execute software or firmware stored in non-transitory computer-readable medium to implement various processing steps. Various components and processors of the object tracking system 100 can be implemented by one or more computing devices including, but not limited to, circuits, a computer, a cloud-based processing unit, a processor, a processing unit, a microprocessor, a mobile computing device, and/or a tablet computer. In some cases, various components of the object tracking system 100 (e.g., the SOT tracker 120, the MOT tracker 130, the fusion and quality predictor 140, the retargeting module 160, the template update module 165, etc.) can be implemented on a shared computing device. Alternatively, a component of the object tracking system 100 can be implemented on multiple computing devices. In some implementations, various modules and components of the object tracking system 100 can be implemented as software, hardware, firmware, or a combination thereof. In some cases, various components of the object tracking system 100 can be implemented in software or firmware executed by a computing device.

Various components of the object tracking system 100 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

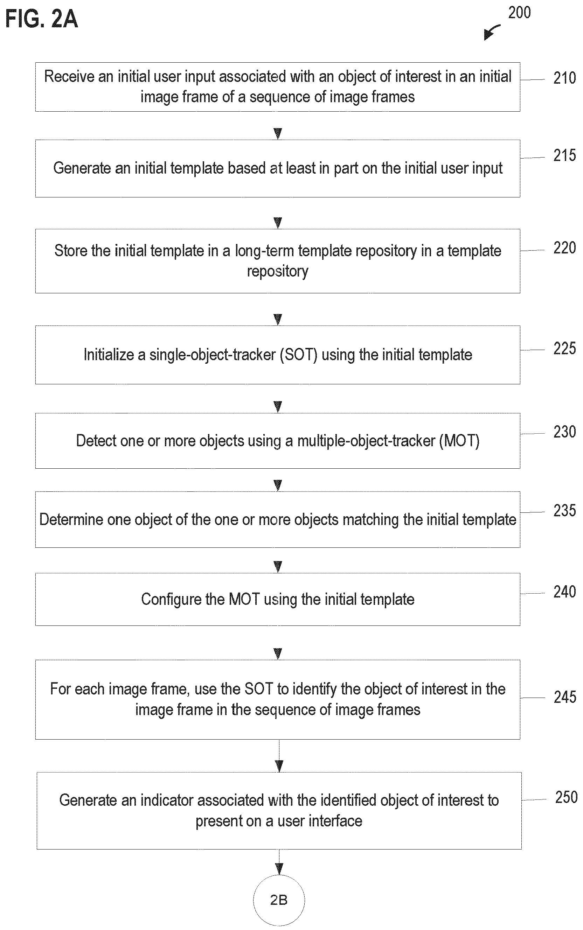

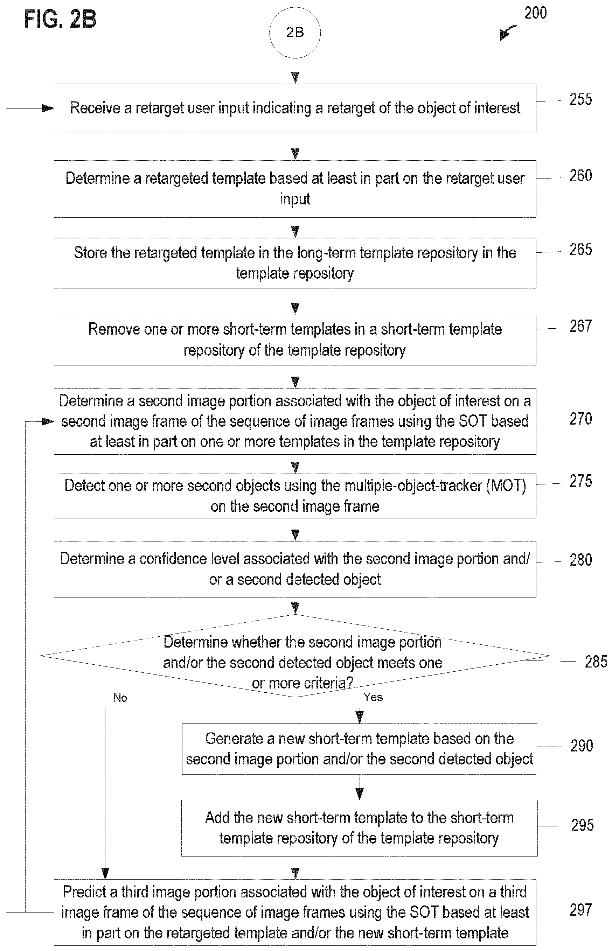

Figures 2A and 2B collectively illustrate a simplified diagram showing a method 200 for object tracking with retargeting inputs according to certain embodiments of the present disclosure. This diagram is merely an example. One of ordinary skill in the art would recognize many variations, alternatives, and modifications. The method 200 for object tracking with retargeting inputs includes processes 210, 215, 220, 225, 230, 235, 240, 245, 250, 255, 260, 265, 267, 270, 275, 280, 285, 290, 295, and 297. Although the above has been shown using a selected group of processes for the method 200 for object tracking with retargeting inputs, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 200 are performed by a system (e.g., the computing system 400). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 210, the system receives an initial user input associated with an object of interest in an initial image frame of a sequence of image frames. In certain embodiments, a user input is received via a user interface and/or a software interface. In some embodiments, the user input is a drawn bounding box. In certain embodiments, the user input is a click, for example, on the initial image frame.

In some examples, users (e.g., users 180 of FIG. 1) can be prompted to provide the user input. In some embodiments, the users can be prompted to provide the user input at regular intervals. In some embodiments, the users 180 can be prompted to provide feedback at irregular intervals. In some embodiments, the users 180 can provide feedback without being prompted (e.g., between adjacent prompting instances, before a prompting instance has occurred, and/or after a prompting instance has occurred).

In certain embodiments, the bounding box is a closed shape. In some examples, the bounding box is a regular polygon, such as a circle, square, rectangle, diamond, etc. In some examples, the bounding box is an irregular polygon (e.g., a shape that does not have equal sides or angles). Examples of regular and/or irregular polygons should be recognized by those of ordinary skill in the art.

In some embodiments, the user input is generated by a machine-learning model (e.g., a language model). In some examples, the machine learning model is an LM that may include an algorithm, rule, model, and/or other programmatic instructions that can predict the probability of a sequence of words. In some embodiments, an LM may, given a starting text string (e.g., one or more words), predict the next word in the sequence. In certain embodiments, an LM may calculate the probability of different word combinations based on the patterns learned during training (based on a set of text data from books, articles, websites, audio files, etc.). In some embodiments, an LM may generate many combinations of one or more next words (and/or sentences) that are coherent and contextually relevant. In certain embodiments, an LM can be an advanced artificial intelligence algorithm that has been trained to understand, generate, and manipulate language. In some embodiments, an LM can be useful for natural language processing, including receiving natural language prompts and providing natural language responses based on the text on which the model is trained. In certain embodiments, an LM may include an n-gram, exponential, positional, neural network, and/or other type of model.

In examples, the machine learning model is an LLM, which was trained on a larger data set and has a larger number of parameters (e.g., billions of parameters) compared to a regular LM. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pre-trained Transformer 3 (GPT-3) model, a GPT 3.5-turbo model, a Claude model, a command-xlang model, a bidirectional encoder representations from transformers (BERT) model, a pathways language model (PaLM) 2, and/or the like. Thus, a prompt describing an object to be tracked may be provided for processing by the LLM, which thus generates a recommendation accordingly.

According to certain embodiments, at process 215, the system generates an initial template based at least in part on the initial user input. In some embodiments, the initial template is the image portion in the bounding box of the initial user input. In certain embodiments, the initial template is associated with metadata, for example, time (temporal) and/or location (e.g., geographical) information related to the initial image frame and/or the image portion. In some examples, the location metadata may include coordinates, such as a latitude value and/or longitude value, rectangular coordinates, and/or polar coordinates.

According to some embodiments, at process 220, the system stores the initial template in a long-term template repository (e.g., the long-term template repository 152) in a template repository (e.g., the template repository 150). In certain embodiments, image templates are classified into two or more categories (e.g., types), for example, templates generated based on model outputs, templated generated based on user inputs. In some embodiments, templates generated based on model outputs are referred to as short-term templates. In certain embodiments, templates generated based on user inputs are referred to as long-term templates. For example, the initial template generated based on the initial user input is a long-term template. In some embodiments, each template is associated with a weight when the template is used for object detection. In certain embodiments, a short-term template has a weight lower than a weight of a long-term template.

In some embodiments, the template repository 150 includes two or more template repositories and each template repository includes templates in a category, for example, a template category of templates generated based on model outputs, a template category of templates generated based on user inputs. In some embodiments, short-term templates (e.g., templates generated based on model outputs) are stored in a short-term template repository (e.g., the short-term template repository 154) of the template repository 150. In certain embodiments, long-term templates (e.g., templates generated based on user inputs) are stored in the long-term template repository.

According to certain embodiments, at process 225, the system initializes a single-object-tracker (SOT) (e.g., the SOT 120) using the initial template. In some embodiments, the SOT is initialized and uses the initial template to detect the object of interest. In certain embodiments, the SOT uses a template matching model. In some embodiments, the SOT extracts features for the initial template and uses the template matching model with the extracted features.

According to some embodiments, at process 230, the system detects one or more objects using a multiple-object-tracker (MOT) (e.g., the MOT 130) of the initial image frames and/or one or more subsequent image frames. In certain embodiments, the MOT uses a trained object detection model. In some embodiments, the MOT uses a deep-learning model for object detections. In certain embodiments, the MOT uses an object detection model that is trained to detect generic objects (e.g., objects of one or more classes). In some embodiments, the MOT includes an object detection model trained for detecting a specific class of objects (e.g., vehicles).

In certain embodiments, the MOT is a region MOT that is configured to detect one or more objects in a specific region in an image frame. In some embodiments, the specific region is determined based on the initial template's identified position in the image frame. In certain examples, the specific region (e.g., search region) has a predetermined size. In some examples, the specific region has the identified initial template position as its center. In certain embodiments, the specific region relates to the identified object of interest by the SOT. In some embodiments, the specific region has the object of interest as its center. In certain embodiments, the MOT includes an association model to identify associated objects across two or more image frames (e.g., two or more images).

According to certain embodiments, at process 235, the system determines that one object of the one or more detected objects matches the initial template. In some embodiments, at process 240, the system configures the MOT using the initial template, for example, assigning a tracking identifier to the matched object.

According to certain embodiments, at process 245, for each frame, the system uses the SOT to identify the object of interest in the image frame in the sequence of image frames. In some embodiments, for each frame, the system uses the SOT and one or more templates in the template library to identify the object of interest in the image frame in the sequence of image frames. In certain embodiments, the system uses the SOT and one or more templates in the template library to identify the object of interest in the subsequent frame in the sequence of image frames. In some embodiments, the one or more templates in the template library are associated with one or more weights, such that the SOT uses the one or more templates and associated weights to detect the object of interest in the image frame and/or to predict the object of interest in the subsequent image frame. In certain embodiments, the weight associated with the latest long-term template is higher than the weight associated with the latest short-term template. In some embodiments, the weight is higher for a template generated from a second image frame than a template generated from a first image frame, if the second image frame is later in sequence.

In certain embodiments, the system uses the identified object of interest in an image frame and a motion model to predict a search region for a subsequent image frame. In some embodiments, the SOT uses the predicted search region and one or more templates (e.g., weighted templates) to identify the object of interest in the subsequent image frame. In some embodiments, the SOT uses a similarity model (e.g., a template matching model) to identify and/or locate an image portion associated with the object of interest in the image frame. In certain embodiments, the SOT uses one or more similarity models (e.g., an appearance model).

According to some embodiments, at process 250, the system generates an indicator associated with the identified object of interest to present on a user interface (e.g., the user interface 170 of Figure 1). In certain embodiments, the indicator indicates a confidence level (e.g., a confidence level of a detection) associated with the identified object of interest. In some embodiments, an indicator includes a first characteristic representing a high confidence level and a second characteristic representing a low confidence level. In certain embodiments, the indicator is in a closed shape (e.g., a rectangle, a circle, an oval, an irregular polygon, etc.). In some examples, an indicator is a closed shape with a solid line and/or a first weight for a detected object having a high confidence level. In certain examples, an indicator is a closed shape with a dashed line and/or a second weight for a detected object having a low confidence level. In some embodiments, the one or more indications include indications of at least a part of the set of detected objects each having a confidence level higher than a threshold. In certain embodiments, the threshold is a predetermined threshold (e.g., previously specified by a user, developer, policy, manufacturer, organization, etc.).

According to certain embodiments, at process 255, the system receives a retarget user input indicating a retarget of the object of interest. In some embodiments, a user is prompted to provide the user input. In some embodiments, the user is prompted to provide the user input at regular intervals. In some embodiments, the user is prompted to provide the user input in response to an output of a process. In some embodiments, the user is prompted to provide the user input at irregular intervals. In some embodiments, the user provides feedback without being prompted.

In some embodiments, the retarget user input is a drawn bounding box (e.g., a closed shape, which may be a regular polygon or an irregular polygon) or a selection (e.g., click). In certain embodiments, at process 267, the system removes one or more m templates in a short-term template repository of the template repository. In some embodiments, when retargeting happens, the short-term template repository is emptied, and/or reset. For example, when retargeting happens, it means the SOT has already lost the target and the short-term template repository may be contaminated with wrong template (embeddings). In some embodiments, an online training step for the SOT is triggered with the user providing a retargeting template via a user input (e.g., a click) and/or receiving a retarget user input.

According to some embodiments, at process 260, the system determines a retargeted template based at least in part on the retarget user input. In certain embodiments, at process 265, the system stores the retargeted template in the long-term template repository in the template repository. In some embodiments, the system uses one or more templates in the long-term template repository and data augmentations to update the SOT and/or train the SOT (e.g., the online tracker model). In certain embodiments, the system uses the retargeting template to predict new target appearance for the object of interest (e.g., target object). In some embodiments, the system assigns a first weight to the initial template and a second weight to the retargeting template. In certain embodiments, the second weight is higher than the first weight.

According to certain embodiments, at process 270, the system determines a second image portion associated with the object of interest on a second image frame of the sequence of image frames using the SOT based at least in part on the retargeted template. In some embodiments, the system determines a second image portion associated with the object of interest on a second image frame of the sequence of image frames using the SOT based at least in part on the retargeted template and one or more other templates in the template library. In certain embodiments, the retargeted template has a higher weight than the one or more other templates, for example, one or more other templates in the long-term template repository.

In certain embodiments, the system uses the identified object of interest in an image frame and a motion model to predict a search region for a subsequent image frame. In some embodiments, the SOT uses the predicted search region and one or more templates (e.g., weighted templates) to identify the object of interest in the subsequent image frame. In some embodiments, the SOT uses a similarity model (e.g., a template matching model) to identify and/or locate an image portion associated with the object of interest in the image frame. In certain embodiments, the SOT uses one or more similarity models (e.g., an appearance model).

In some embodiments, the system determines one or more similarities (e.g., similarity metrics) between a template and the identified object of interest. In some embodiments, the system determines a similarity metric (e.g., a distance) between the template and the identified object of interest. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the template and the identified object of interest using a Siamese neural network and/or the like. In certain embodiments, the system determines a similarity distance between the template and the identified object of interest.

According to some embodiments, the system determines a confidence level for the identified object of interest and/or the corresponding image portion. In some embodiments, the system determines a confidence level for the identified object of interest and/or the corresponding image portion based at least in part on the one or more determined similarities.

According to some embodiments, at process 275, the system detects one or more second objects using the multiple-object-tracker (MOT) on the second image frame. In certain embodiments, the MOT detects the one or more second objects in a search region that is determined based on the SOT output. In some embodiments, the system determines the search region based on the SOT output in an image frame prior to the second image frame and a motion model.

According to certain embodiments, at process 280, the system determines a confidence level associated with the second image portion. In some embodiments, the confidence level is determined based at least in part on the one or more detected second objects by the MOT. In certain embodiments, the confidence level is determined by the SOT.

According to some embodiments, at process 285, the system determines whether the second image portion meets one or more criteria. In certain embodiments, the criteria include a criterion of similarity of the second image portion and/or its embedding and each of the one or more second objects. In some embodiments, the criterion of similarity includes a similarity threshold. In certain embodiments, the criteria include a criterion of confidence level above a threshold (e.g., 50%, 60%, 80%, etc.). In some embodiments, the criteria include a criterion of confidence level above a predetermined threshold.

According to certain embodiments, at process 290, if the second image portion meets the one or more criteria, the system generates a new short-term template based on the second image portion. In some embodiments, the new short-term template includes one or more features and/or embeddings extracted from the second image portion. In certain embodiments, at process 295, the system adds the new short-term template to the short-term template repository of the template repository. In some embodiments, the system assigns a new weight associated with the new short-term template. In certain embodiments, the weight of the new short-term template is higher than one or more existing short-term templates, for example, the one or more templates in the short-term template repository.

According to certain embodiments, at process 297, the system predicts a third image portion associated with the object of interest on a third image frame of the sequence of image frames using the SOT based at least in part on the retargeted template and/or the new short-term template. In some embodiments, the SOT uses a similarity model (e.g., a template matching model) to identify and/or locate an image portion associated with the object of interest in the image frame. In certain embodiments, the SOT uses one or more similarity models (e.g., an appearance model).

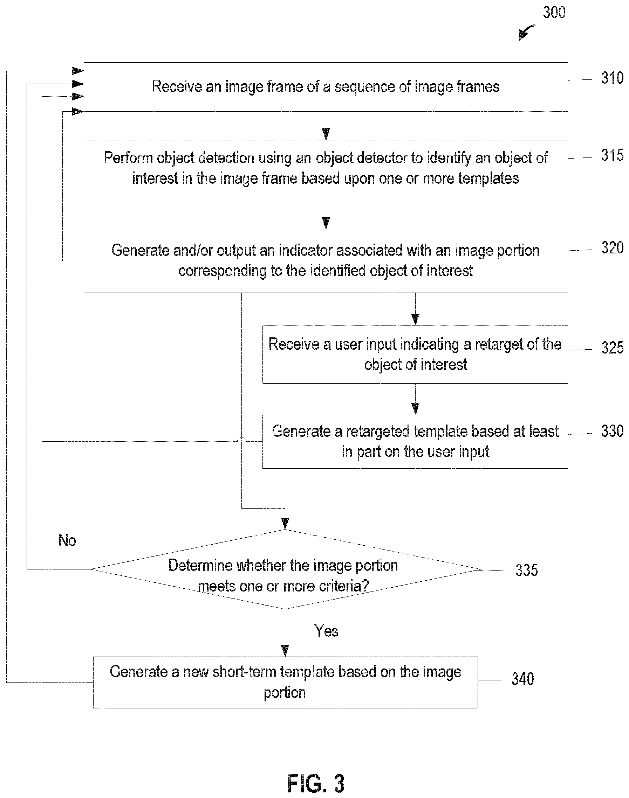

Figure 3 collectively is a simplified diagram showing a method 300 for object tracking with retargeting inputs according to certain embodiments of the present disclosure. This diagram is merely an example. One of ordinary skill in the art would recognize many variations, alternatives, and modifications. The method 300 for object tracking with retargeting inputs includes processes 310, 315, 320, 325, 330, 335, and 340. Although the above has been shown using a selected group of processes for the method 300 for object tracking with retargeting inputs, there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In some embodiments, some or all processes (e.g., steps) of the method 300 are performed by a system (e.g., the computing system 400). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives an image frame of a sequence of image frames. In some embodiments, the image frame is received from an image sensor (e.g., a still camera, a video camera, a satellite). In certain embodiments, at process 315, the system performs object detection using an object detector (e.g., a SOT) to identify an object of interest in the image frame based upon one or more templates. In some embodiments, the one or more templates include one or more templates generated based on user inputs (e.g., long-term templates). In certain embodiments, the one or more templates include one or more templates generated based on model detection and/or inference (e.g., short-term templates). In some embodiments, the one or more templates are stored in a template repository. In certain embodiments, the template repository includes a short-term template repository storing one or more short-term templates and a long-term template repository storing one or more long-term templates. In some embodiments, the system identifies the object of interest using a similarity model (e.g., a template matching model). In some embodiments, the latest long-term template has a higher weight than the weight of the latest short-term template.

In certain embodiments, the system uses the identified object of interest in an image frame and a motion model to predict a search region for a subsequent image frame. In some embodiments, the SOT uses the predicted search region and one or more templates (e.g., weighted templates) to identify the object of interest in the subsequent image frame. In some embodiments, the SOT uses a similarity model (e.g., a template matching model) to identify and/or locate an image portion associated with the object of interest in the image frame. In certain embodiments, the SOT uses one or more similarity models (e.g., an appearance model).

According to certain embodiments, at process 320, the system generates and/or outputs an indicator associated with an image portion corresponding to the identified object of interest. In some embodiments, the system determines one or more similarities (e.g., similarity metrics) between a template and the identified object of interest. In some embodiments, the system determines a similarity metric (e.g., a distance) between the template and the identified object of interest. In certain embodiments, the system determines the similarity metric using a similarity machine-learning model, for example, a regression similarity learning model, a classification similarity learning model, a ranking similarity learning model, and/or the like. In some embodiments, the system determines the similarity metric between the template and the identified object of interest using a Siamese neural network and/or the like. In certain embodiments, the system determines a similarity distance between the template and the identified object of interest.

According to some embodiments, the system determines a confidence level for the identified object of interest and/or the corresponding image portion. In some embodiments, the system determines a confidence level for the identified object of interest and/or the corresponding image portion based at least in part on the one or more determined similarities. In certain embodiments, the system processes subsequent image frames in a recursive process, for example, go back to process 310.

According to certain embodiments, at process 325, the system receives a user input indicating a retarget of the object of interest. Therefore, in some embodiments, the user input is associated with the object of interest. In some embodiments, the user input indicates an identified image portion in the received image frame of process 310. In some embodiments, the retarget user input is a drawn bounding box (e.g., a closed shape) or a selection (e.g., click). In certain embodiments, the system removes one or more short-term templates in the short-term template repository of the template repository. In some embodiments, when retargeting happens, the short-term template repository is emptied, and/or reset. For example, when retargeting happens, it means the SOT has already lost the target and the short-term template repository may be contaminated with wrong template (embeddings). In some embodiments, an online training step for the SOT is triggered with the user providing a retargeting template via a user input (e.g., a click) and/or receiving a retarget user input.

According to some embodiments, at process 330, the system generates a retargeted template based at least in part on the user input (e.g., based at least in part on the identified image portion indicated by and/or associated with the user input). In certain embodiments, the system stores the retargeted template in the long-term template repository in the template repository. In some embodiments, the system uses one or more templates in the long-term template repository and data augmentations to update the SOT and/or train the SOT (e.g., the online tracker model). In certain embodiments, the system uses the retargeting template to predict new target appearance for the object of interest (e.g., target object). In some embodiments, the system assigns a first weight to an existing long-term template and a second weight to the retargeting template. In certain embodiments, the second weight is higher than the first weight.

In some embodiments, the system goes back to the process 310 for the subsequent image frame. For example, a second image portion associated with the object of interest in a second image frame may be determined, using the object tracker, based at least in part on the retargeted template generated at process 330. In some embodiments, the second image frame is after the first image frame in the sequence of image frames (e.g., the second image frame is associated with a later instance in time than the first image frame). In some embodiments, the second image portion is different from the first image portion. In certain embodiments, a second indicator is generated at process 320 that is associated with the second image portion.

According to certain embodiments, at process 335, the system determines whether the image portion meets one or more criteria. In certain embodiments, the criteria include a criterion of similarity of the second image portion and/or its embedding and each of the one or more second objects. In some embodiments, the criterion of similarity includes a similarity threshold. In certain embodiments, the criteria include a criterion of confidence level above a threshold (e.g., 50%, 60%, 80%, etc.). In some embodiments, the criteria include a criterion of confidence level above a predetermined threshold. In certain embodiments, the criteria include a criterion of similarity between the image portion and at least one object of one or more objects detected by a MOT. In some embodiments, if the image portion does not meet the one or more criteria, the system the system goes back to the process 310 for the subsequent image frame.

According to some embodiments, at process 340, if the image portion meets the one or more criteria, the system generates a new short-term template based on the image portion. In some embodiments, the new short-term template includes one or more features and/or embeddings extracted from the image portion. In certain embodiments, the system adds the new short-term template to the short-term template repository of the template repository. In some embodiments, the system assigns a new weight associated with the new short-term template. In certain embodiments, the weight of the new short-term template is higher than one or more existing short-term templates, for example, the one or more templates in the short-term template repository. In some embodiments, the system goes back to the process 310 for the subsequent image frame.

Figure 4 is a simplified diagram showing a computing system for implementing a system 400 for object tracking with retargeting inputs in accordance with at least one example set forth in the disclosure. This diagram is merely an example, which should not unduly limit the scope of the claims. One of ordinary skill in the art would recognize many variations, alternatives, and modifications.

The computing system 400 includes a bus 402 or other communication mechanism for communicating information, a processor 404, a display 406, a cursor control component 408, an input device 410, a main memory 412, a read only memory (ROM) 414, a storage unit 416, and a network interface 418. In some embodiments, some or all processes (e.g., steps) of the methods 200 and/or 300 are performed by the computing system 400. In some examples, the bus 402 is coupled to the processor 404, the display 406, the cursor control component 408, the input device 410, the main memory 412, the read only memory (ROM) 414, the storage unit 416, and/or the network interface 418. In certain examples, the network interface is coupled to a network 420. For example, the processor 404 includes one or more general purpose microprocessors. In some examples, the main memory 412 (e.g., random access memory (RAM), cache and/or other dynamic storage devices) is configured to store information and instructions to be executed by the processor 404. In certain examples, the main memory 412 is configured to store temporary variables or other intermediate information during execution of instructions to be executed by processor 404. For examples, the instructions, when stored in the storage unit 416 accessible to processor 404, render the computing system 400 into a special-purpose machine that is customized to perform the operations specified in the instructions. In some examples, the ROM 414 is configured to store static information and instructions for the processor 404. In certain examples, the storage unit 416 (e.g., a magnetic disk, optical disk, or flash drive) is configured to store information and instructions.

In some embodiments, the display 406 (e.g., a cathode ray tube (CRT), an LCD display, or a touch screen) is configured to display information to a user of the computing system 400. In some examples, the input device 410 (e.g., alphanumeric and other keys) is configured to communicate information and commands to the processor 404. For example, the cursor control component 408 (e.g., a mouse, a trackball, or cursor direction keys) is configured to communicate additional information and commands (e.g., to control cursor movements on the display 406) to the processor 404.

According to certain embodiments, a method for user-assisted object tracking is provided. The method includes: receiving a first image frame of a sequence of image frames; performing object detection using an object tracker to identify an object of interest in the first image frame, based upon one or more templates associated with the object of interest in a template repository; outputting a first indicator associated with a first image portion corresponding to the object of interest; receiving a user input associated with the object of interest, the user input indicating an identified image portion in the first image frame; generating a retargeted template, based at least in part on the identified image portion; and determining a second image portion associated with the object of interest in a second image frame of the sequence of image frames, using the object tracker, based at least in part on the retargeted template. In some examples, the second image frame is after the first image frame in the sequence of image frames. In some examples, the second image portion is different from the first image portion. In some examples, the method is performed using one or more processors. For example, the method is implemented according to at least Figure 1, Figures 2A, Figure 2B, and/or Figure 3.

In some embodiments, the method further includes generating a second indicator associated with the second image portion. In certain embodiments, the method further includes storing the retargeted template to a long-term template repository of the template repository. In some embodiments, the method further includes resetting a short-term template repository of the template repository by removing one or more short-term templates from the short-term template repository. In certain embodiments, the method further includes identifying a third image portion associated with the object of interest, using the object tracker, on a third image frame of the sequence of image frames, based at least in part on the retargeted template, wherein the third image frame is after the second image frame in the sequence of image frames; determining a confidence level associated with the third image portion; comparing the confidence level to one or more predetermined criteria; and in response to the comparing: generating a short-term template, based on the third image portion; and adding the short-term template to the short-term template repository.

In certain embodiments, the method further includes assigning a first weight to the retargeted template; and assigning a second weight to the short-term template; wherein the first weight is higher than the second weight. In some embodiments, the method further includes determining a fourth image portion of the object of interest on a fourth image frame of the sequences of image frames using the object tracker based at least in part on the retargeted template, the short-term template, the first weight and the second weight; wherein the fourth image frame is after the third image frame in the sequence of image frames. In certain embodiments, the user input is a first user input and the retargeted template is a first retargeted template; wherein the method further includes: receiving a second user input associated with the object of interest on a fifth image frame of the sequence of image frames, wherein the fifth image frame is after the second image frame in the sequence of image frames; generating a second retargeted template based at least in part on the second user input; and assigning a third weight to the second retargeted template; wherein the third weight is higher than the first weight.

In some embodiments, the user input is a second user input and the identified image portion is a second identified image portion, where the method further includes: receiving a first user input associated with a first identified image portion on an initial image frame of the sequence of image frames; generating an initial template based at least in part on the first identified image portion; and initializing the object tracker based at least in part on the initial template. In certain embodiments, the method further comprises identifying a plurality of objects using a software detector, the software detector including a machine-learning model; comparing each object of the plurality of objects with the initial template; determining that one object of the plurality of objects matches to the initial template; and initializing the software detector, based at least in part on the one object of the plurality of objects.

According to certain embodiments, a system for user-assisted object tracking is provided. The system includes at least one processor and at least one memory storing instructions that, when executed by the at least one processor, causes the system to perform a set of operations. The set of operations includes: receiving a first image frame of a sequence of image frames; performing object detection using an object tracker to identify an object of interest in the first image frame, based upon one or more templates associated with the object of interest in a template repository; outputting a first indicator associated with a first image portion corresponding to the object of interest; receiving a user input associated with the object of interest, the user input indicating an identified image portion in the first image frame; generating a retargeted template, based at least in part on the identified image portion; and determining a second image portion associated with the object of interest in a second image frame of the sequence of image frames, using the object tracker, based at least in part on the retargeted template. In some examples, the second image frame is after the first image frame in the sequence of image frames. In some examples, the second image portion is different from the first image portion. For example, the system is implemented according to at least Figure 1, Figures 2A, Figure 2B, Figure 3, and/or Figure 4.

In some embodiments, the set of operations further includes generating a second indicator associated with the second image portion. In certain embodiments, the set of operations further includes storing the retargeted template to a long-term template repository of the template repository. In some embodiments, the set of operations further includes resetting a short-term template repository of the template repository by removing one or more short-term templates from the short-term template repository. In certain embodiments, the set of operations further includes identifying a third image portion associated with the object of interest, using the object tracker, on a third image frame of the sequence of image frames, based at least in part on the retargeted template, wherein the third image frame is after the second image frame in the sequence of image frames; determining a confidence level associated with the third image portion; comparing the confidence level to one or more predetermined criteria; and in response to the comparing: generating a short-term template, based on the third image portion; and adding the short-term template to the short-term template repository.

In certain embodiments, the set of operations further includes assigning a first weight to the retargeted template; and assigning a second weight to the short-term template; wherein the first weight is higher than the second weight. In some embodiments, the set of operations further includes determining a fourth image portion of the object of interest on a fourth image frame of the sequences of image frames using the object tracker based at least in part on the retargeted template, the short-term template, the first weight and the second weight; wherein the fourth image frame is after the third image frame in the sequence of image frames. In certain embodiments, the user input is a first user input and the retargeted template is a first retargeted template; wherein the set of operations further includes: receiving a second user input associated with the object of interest on a fifth image frame of the sequence of image frames, wherein the fifth image frame is after the second image frame in the sequence of image frames; generating a second retargeted template based at least in part on the second user input; and assigning a third weight to the second retargeted template; wherein the third weight is higher than the first weight.

In some embodiments, the user input is a second user input and the identified image portion is a second identified image portion, wherein the set of operations further includes: receiving a first user input associated with a first identified image portion on an initial image frame of the sequence of image frames; generating an initial template based at least in part on the first identified image portion; and initializing the object tracker based at least in part on the initial template. In certain embodiments, the set of operations further comprises identifying a plurality of objects using a software detector, the software detector including a machine-learning model; comparing each object of the plurality of objects with the initial template; determining that one object of the plurality of objects matches to the initial template; and initializing the software detector, based at least in part on the one object of the plurality of objects.

According to certain embodiments, a method for user-assisted object tracking is provided. The method includes: receiving a first image frame of a sequence of image frames; performing object detection using an object tracker to identify an object of interest in the first image frame, based upon one or more templates associated with the object of interest in a template repository, the object tracker being initialized by: receiving a first user input associated with a first identified image portion on the first image frame of the sequence of image frames; generating an initial template, based at least in part on the first identified image portion; and initializing the object tracker, based at least in part on the initial template. In some examples, the method further includes outputting a first indicator associated with the object of interest; receiving a second user input associated with the object of interest, the second user input indicating a second identified image portion in the first image frame; generating a retargeted template, based at least in part on the second identified image portion; determining a second image portion associated with the object of interest in a second image frame of the sequence of image frames, using the object tracker, based at least in part on the retargeted template; identifying a plurality of objects using a software detector, the software detector being initialized by: comparing each object of the plurality of objects with the initial template; determining that one object of the plurality of objects matches to the initial template; and initializing the software detector, based at least in part on the one object of the plurality of objects. In some examples, the method is performed using one or more processors.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A method for user-assisted object tracking, the method comprising:
receiving (310) a first image frame of a sequence of image frames;
performing (315) object detection using an object tracker to identify an object of interest in the first image frame, based upon one or more templates associated with the object of interest in a template repository;
outputting (320) a first indicator associated with a first image portion corresponding to the object of interest;
receiving (325) a user input associated with the object of interest, the user input indicating an identified image portion in the first image frame;
generating (330) a retargeted template, based at least in part on the identified image portion;
determining a second image portion associated with the object of interest in a second image frame of the sequence of image frames, using the object tracker, based at least in part on the retargeted template, wherein the second image frame is after the first image frame in the sequence of image frames and the second image portion is different from the first image portion;
identifying a third image portion associated with the object of interest, using the object tracker, on a third image frame of the sequence of image frames, based at least in part on the retargeted template, wherein the third image frame is after the second image frame in the sequence of image frames;
determining a confidence level associated with the third image portion;
evaluating whether the confidence level meets one or more predetermined criteria;
in response to the confidence level meeting the one or more predetermined criteria:
generating a short-term template, based on the third image portion;
adding the short-term template to a short-term template repository of the template repository;
assigning a first weight to the retargeted template;
assigning a second weight to the short-term template, wherein the first weight is higher than the second weight; and
determining a fourth image portion of the object of interest on a fourth image frame of the sequence of image frames, using the object tracker, based at least in part on the retargeted template, the short-term template, the first weight, and the second weight, wherein the fourth image frame is after the third image frame in the sequence of image frames,
wherein the method is performed using one or more processors.

2. The method of claim 1, further comprising:
generating a second indicator associated with the second image portion.

3. The method of claim 1 or claim 2, further comprising:
storing the retargeted template to a long-term template repository of the template repository.

4. The method of claim 3, further comprising:
resetting a short-term template repository of the template repository by removing one or more short-term templates from the short-term template repository.

5. The method of any preceding claim, wherein the user input is a first user input and the retargeted template is a first retargeted template, and wherein the method further comprises:
receiving a second user input associated with the object of interest on a fifth image frame of the sequence of image frames, wherein the fifth image frame is after the second image frame in the sequence of image frames;
generating a second retargeted template based at least in part on the second user input;
and
assigning a third weight to the second retargeted template,
wherein the third weight is higher than the first weight.

6. The method of any of claims 1 to 4, wherein the user input is a second user input and the identified image portion is a second identified image portion, and wherein the method further comprises:
receiving a first user input associated with a first identified image portion on an initial image frame of the sequence of image frames;
generating an initial template based at least in part on the first identified image portion;
and
initializing the object tracker based at least in part on the initial template.

7. The method of claim 6, further comprising:
identifying a plurality of objects using a software detector, the software detector including a machine-learning model;
comparing each object of the plurality of objects with the initial template;
determining that one object of the plurality of objects matches to the initial template; and
initializing the software detector, based at least in part on the one object of the plurality of objects.

8. A system for user-assisted object tracking, the system comprising:
at least one processor (404); and
at least one memory (412) storing instructions that, when executed by the at least one processor, causes the system to perform a method in accordance with any preceding claim.

## Patentansprüche

1. Verfahren zur benutzerunterstützten Objektverfolgung, wobei das Verfahren Folgendes umfasst:
Empfangen (310) eines ersten Bild-Frames einer Sequenz von Bild-Frames;
Durchführen (315) einer Objekterkennung unter Verwendung eines Objektverfolgers, um ein Objekt von Interesse in dem ersten Bild-Frame basierend auf einer oder mehrerer Vorlagen, die dem Objekt von Interesse in einem Vorlagen-Repositorium zugeordnet sind, zu identifizieren,
Ausgeben (320) eines ersten Indikators, der einem ersten Bildabschnitt zugeordnet ist, der dem Objekt von Interesse entspricht;
Empfangen (325) einer Benutzereingabe, die dem Objekt von Interesse zugeordnet ist, wobei die Benutzereingabe einen identifizierten Bildabschnitt in dem ersten Bild-Frame angibt;
Erzeugen (330) einer neu ausgerichteten Vorlage basierend zumindest teilweise auf dem identifizierten Bildabschnitt;
Bestimmen eines zweiten Bildabschnitts, der dem Objekt von Interesse in einem zweiten Bild-Frame der Sequenz von Bild-Frames zugeordnet ist, unter Verwendung des Objektverfolgers, basierend zumindest teilweise auf der neu ausgerichteten Vorlage, wobei sich das zweite Bild-Frame nach dem ersten Bild-Frame in der Sequenz von Bild-Frames befindet und sich der zweite Bildabschnitt von dem ersten Bildabschnitt unterscheidet;
Identifizieren eines dritten Bildabschnitts, der dem Objekt von Interesse zugeordnet ist, unter Verwendung des Objektverfolgers, auf einem dritten Bild-Frame der Sequenz von Bild-Frames basierend zumindest teilweise auf der neu ausgerichteten Vorlage, wobei sich das dritte Bild-Frame nach dem zweiten Bild-Frame in der Sequenz von Bild-Frames befindet;
Bestimmen eines Konfidenzniveaus, das dem dritten Bildabschnitt zugeordnet ist;
Bewerten, ob das Konfidenzniveau ein oder mehrere vorbestimmte Kriterien erfüllt;
als Reaktion darauf, dass das Konfidenzniveau das eine oder die mehreren vorbestimmten Kriterien erfüllt: Erzeugen einer Kurzzeitvorlage basierend auf dem dritten Bildabschnitt;
Hinzufügen der Kurzzeitvorlage zu einem Kurzzeitvorlagen-Repositorium des Vorlagen-Repositoriums;
Zuweisen einer ersten Gewichtung zu der neu ausgerichteten Vorlage;
Zuweisen einer zweiten Gewichtung zu der Kurzzeitvorlage, wobei die erste Gewichtung höher als die zweite Gewichtung ist; und
Bestimmen eines vierten Bildabschnitts des Objekts von Interesse auf einem vierten Bild-Frame der Sequenz von Bild-Frames, unter Verwendung des Objektverfolgers, basierend zumindest teilweise auf der neu ausgerichteten Vorlage, der Kurzzeitvorlage, der ersten Gewichtung und der zweiten Gewichtung, wobei sich das vierte Bild-Frame nach dem dritten Bild-Frame in der Sequenz von Bild-Frames befindet,
wobei das Verfahren unter Verwendung eines oder mehrerer Prozessoren durchgeführt wird.

2. Verfahren nach Anspruch 1, ferner umfassend:
Erzeugen eines zweiten Indikators, der dem zweiten Bildabschnitt zugeordnet ist.

3. Verfahren nach Anspruch 1 oder Anspruch 2, ferner umfassend:
Speichern der neu ausgerichteten Vorlage in einem Langzeitvorlagen-Repositorium des Vorlagen-Repositoriums.

4. Verfahren nach Anspruch 3, ferner umfassend:
Zurücksetzen eines Kurzzeitvorlagen-Repositoriums des Vorlagen-Repositoriums durch Entfernen einer oder mehrerer Kurzzeitvorlagen aus dem Kurzzeitvorlagen-Repositorium.

5. Verfahren nach einem vorhergehenden Anspruch, wobei die Benutzereingabe eine erste Benutzereingabe ist und die neu ausgerichtete Vorlage eine erste neu ausgerichtete Vorlage ist, und wobei das Verfahren ferner Folgendes umfasst:
Empfangen einer zweiten Benutzereingabe, die dem Objekt von Interesse zugeordnet ist, auf einem fünften Bild-Frame der Sequenz von Bild-Frames, wobei sich das fünfte Bild-Frame nach dem zweiten Bild-Frame in der Sequenz von Bild-Frames befindet;
Erzeugen einer zweiten neu ausgerichteten Vorlage basierend zumindest teilweise auf der zweiten Benutzereingabe; und
Zuweisen einer dritten Gewichtung zu der zweiten neu ausgerichteten Vorlage,
wobei die dritte Gewichtung höher als die erste Gewichtung ist.

6. Verfahren nach einem der Ansprüche 1 bis 4, wobei die Benutzereingabe eine zweite Benutzereingabe ist und der identifizierte Bildabschnitt ein zweiter identifizierter Bildabschnitt ist, und wobei das Verfahren ferner Folgendes umfasst:
Empfangen einer ersten Benutzereingabe, die einem ersten identifizierten Bildabschnitt auf einem anfänglichen Bild-Frame der Sequenz von Bild-Frames zugeordnet ist;
Erzeugen einer anfänglichen Vorlage basierend zumindest teilweise auf dem ersten identifizierten Bildabschnitt; und
Initialisieren des Objektverfolgers basierend zumindest teilweise auf der anfänglichen Vorlage.

7. Verfahren nach Anspruch 6, ferner umfassend:
Identifizieren einer Vielzahl von Objekten unter Verwendung eines Softwaredetektors, wobei der Softwaredetektor ein Modell zum maschinellen Lernen beinhaltet;
Vergleichen jedes Objekts der Vielzahl von Objekten mit der anfänglichen Vorlage;
Bestimmen, dass ein Objekt der Vielzahl von Objekten mit der anfänglichen Vorlage übereinstimmt; und Initialisieren des Softwaredetektors basierend zumindest teilweise auf dem einen Objekt der Vielzahl von Objekten.

8. System zur benutzerunterstützten Objektverfolgung, wobei das System Folgendes umfasst:
mindestens einen Prozessor (404); und
mindestens einen Speicher (412), der Anweisungen speichert, die, wenn sie durch den mindestens einen Prozessor ausgeführt werden, das System dazu veranlassen, ein Verfahren gemäß einem vorhergehenden Anspruch durchzuführen.

## Revendications

1. Procédé de suivi d'objet assisté par l'utilisateur, le procédé comprenant :
la réception (310) d'une première trame d'image d'une séquence de trames d'image ;
la réalisation (315) d'une détection d'objet à l'aide d'un dispositif de suivi d'objet afin d'identifier un objet d'intérêt dans la première trame d'image, sur la base d'un ou de plusieurs modèles associés à l'objet d'intérêt dans un référentiel de modèles ;
la sortie (320) d'un premier indicateur associé à une première partie d'image correspondant à l'objet d'intérêt ;
la réception (325) d'une entrée d'utilisateur associée à l'objet d'intérêt, l'entrée d'utilisateur indiquant une partie d'image identifiée dans la première trame d'image ;
la génération (330) d'un modèle reciblé, sur la base au moins en partie de la partie d'image identifiée ;
la détermination d'une deuxième partie d'image associée à l'objet d'intérêt dans une deuxième trame d'image de la séquence de trames d'image, à l'aide du dispositif de suivi d'objet, sur la base au moins en partie du modèle reciblé, dans lequel la deuxième trame d'image est après la première trame d'image dans la séquence de trames d'image et la deuxième partie d'image est différente de la première partie d'image ;
l'identification d'une troisième partie d'image associée à l'objet d'intérêt, à l'aide du dispositif de suivi d'objet, sur une troisième trame d'image de la séquence de trames d'image, sur la base au moins en partie du modèle reciblé, dans lequel la troisième trame d'image est après la deuxième trame d'image dans la séquence de trames d'image ;
la détermination d'un niveau de confiance associé à la troisième partie d'image ;
l'évaluation si le niveau de confiance respecte un ou plusieurs critères prédéfinis ;
en réponse au fait que le niveau de confiance respecte l'un ou plusieurs critères prédéfinis :
la génération d'un modèle à court terme, sur la base de la troisième partie d'image ;
l'ajout du modèle à court terme à un référentiel de modèles à court terme du référentiel de modèles ;
l'attribution d'un premier poids au modèle reciblé ;
l'attribution d'un deuxième poids au modèle à court terme, dans lequel le premier poids est supérieur au deuxième poids ; et
la détermination d'une quatrième partie d'image de l'objet d'intérêt sur une quatrième trame d'image de la séquence de trames d'image, à l'aide du dispositif de suivi d'objet, sur la base au moins en partie du modèle reciblé, du modèle à court terme, du premier poids et du deuxième poids, dans lequel la quatrième trame d'image est après la troisième trame d'image dans la séquence de trames d'image,
dans lequel le procédé est réalisé à l'aide d'un ou de plusieurs processeurs.

2. Procédé selon la revendication 1, comprenant en outre :
la génération d'un deuxième indicateur associé à la deuxième partie d'image.

3. Procédé selon la revendication 1 ou la revendication 2, comprenant en outre :
le stockage du modèle reciblé dans un référentiel de modèles à long terme du référentiel de modèles.

4. Procédé selon la revendication 3, comprenant en outre :
la réinitialisation d'un référentiel de modèles à court terme du référentiel de modèles en supprimant un ou plusieurs modèles à court terme du référentiel de modèles à court terme.

5. Procédé selon l'une quelconque des revendications précédentes, dans lequel l'entrée d'utilisateur est une première entrée d'utilisateur et le modèle reciblé est un premier modèle reciblé, et dans lequel le procédé comprend en outre :
la réception d'une deuxième entrée d'utilisateur associée à l'objet d'intérêt sur une cinquième trame d'image de la séquence de trames d'image, dans lequel la cinquième trame d'image est après la deuxième trame d'image dans la séquence de trames d'image ;
la génération d'un deuxième modèle reciblé sur la base au moins en partie de la deuxième entrée d'utilisateur ; et
l'attribution d'un troisième poids au deuxième modèle reciblé,
dans lequel le troisième poids est supérieur au premier poids.

6. Procédé selon l'une quelconque des revendications 1 à 4, dans lequel l'entrée d'utilisateur est une deuxième entrée d'utilisateur et la partie d'image identifiée est une deuxième partie d'image identifiée, et dans lequel le procédé comprend en outre :
la réception d'une première entrée d'utilisateur associée à une première partie d'image identifiée sur une trame d'image initiale de la séquence de trames d'image ;
la génération d'un modèle initial sur la base au moins en partie de la première partie d'image identifiée ; et
l'initialisation du dispositif de suivi d'objet sur la base au moins en partie du modèle initial.

7. Procédé selon la revendication 6, comprenant en outre :
l'identification d'une pluralité d'objets à l'aide d'un détecteur logiciel, le détecteur logiciel comprenant un modèle d'apprentissage automatique ;
la comparaison de chaque objet de la pluralité d'objets au modèle initial ;
la détermination qu'un objet parmi la pluralité d'objets correspond au modèle initial ; et
l'initialisation du détecteur de logiciel, sur la base au moins en partie de cet objet parmi la pluralité d'objets.

8. Système de suivi d'objet assisté par l'utilisateur, le système comprenant :
au moins un processeur (404) ; et
au moins une mémoire (412) stockant des instructions qui, lorsqu'elles sont exécutées par l'au moins un processeur, amènent le système à réaliser un procédé selon l'une quelconque des revendications précédentes.
